# FASCICULE DE BREVET EUROPEEN

(11) **EP 1 214 013 B1**
(45) Date de publication et mention de la délivrance du brevet: **04.10.2006**
(21) Numéro de dépôt: 00958633.0
(22) Date de dépôt: 28.07.2000
(51) Int. Cl.: A61C 5/02

(54) **INSTRUMENT CANALAIRE DU TYPE ALESOIR DENTAIRE**
INSTRUMENT ZUR AUFBEREITUNG VON ZAHNWURZELKANÄLEN
ROOT CANAL INSTRUMENT SUCH AS A ROOT-CANAL REAMER

(30) Priorité: 10.09.1999 FR 9911448
(43) Date de publication de la demande: 19.06.2002
(73) Titulaire: MICRO MEGA INTERNATIONAL MANUFACTURES, 25000 Besançon (FR)
(72) Inventeur: BADOZ, Jean-Marie, F-25300 Doubs (FR)
(74) Mandataire: Poupon, Michel
(86) Numéro de dépôt international: PCT/FR2000/002162
(87) Numéro de publication internationale: WO 2001/019279

(56) Documents cités:
- WO-A-97/21392
- WO-A-99/37235
- WO-A-99/43469
- CH-A- 670 756
- US-A- 5 464 362

## Description

La présente invention se rapporte au domaine de la réalisation des instruments endodontiques pour la préparation des canaux dentaires et plus particulièrement aux instruments canalaires du type alésoirs dentaires comportant une section de travail appelée « lame » comprenant trois cannelures formant trois lèvres de coupe.

L'art antérieur connaît déjà des instruments canalaires comportent une section de travail comprenant trois cannelures formant trois lèvres de coupe.

En particulier, l'art antérieur connaît ce type d'instrument des demandes de brevet français N° 96 04987 et 96 14347.

Les instruments décrits dans les demandes de brevet précitées présentent une symétrie circulaire d'ordre trois ou plus selon le nombre de lèvres de coupe de l'instrument.

Ainsi, lorsque l'instrument est utilisé en notation dans un canal dentaire courbe, l'instrument suit l'axe du canal grâce à l'équilibre des forces appliquées à l'instrument.

Ce genre d'instrument donne satisfaction sauf lorsque le canal ne peut pas être assimilé à un trou de section circulaire. En effet, dans ce dernier cas, les efforts appliqués lors de la préparation du canal ne sont plus équilibrés et la trajectoire de l'instrument risque de dévier par rapport à l'axe du canal dentaire. Cette déviation peut avoir des conséquences très graves car elle peut conduire à la réalisation d'une fausse route voire d'une perforation du canal.

De la même manière le document WO 97/21392 décrit un instrument canalaire dans lequel les trois cannelures sont totalement asymétriques avec des profondeurs de lèvres de coupe identiques sur toute leur longueur.

La présente invention entend remédier aux inconvénients de l'art antérieur en proposant un instrument dont la lame permet de pallier ce risque. Ce but est atteint en rompant volontairement la symétrie circulaire de l'instrument de sorte que la résistance à la flexion de la lame n'étant plus la même dans toutes les directions, la pointe de l'instrument est amenée à rechercher le canal dentaire et à y pénétrer naturellement.

Ainsi, l'instrument canalaire selon l'invention, comporte une section de travail comprenant trois cannelures formant trois lèvres de coupe et il est caractérisé en ce que les trois lèvres de coupe sont situées aux sommets d'un triangle, non pas équilatéral, mais isocèle et en ce que la profondeur de la troisième cannelure est plus importante que les deux premières cannelures à la pointe de la section de travail de l'instrument, puis devient identique à la profondeur des deux premières cannelures en direction de la fin de section de travail.

La présente invention se rapporte également à différents procédés de réalisation de l'instrument canalaire selon l'invention.

On comprendra mieux l'invention à l'aide de la description faite ci-après d'un mode de mise en oeuvre donné à titre d'exemple non limitatif, en référence aux figures annexées dans lesquelles :
- la figure 1 illustre une vue en coupe transversale d'un instrument canalaire de l'art antérieur dont les trois lèvres de coupe sont situées aux sommets d'un triangle équilatéral ;
- la figure 2 illustre une vue en coupe transversale d'un instrument canalaire selon l'invention obtenu par un premier procédé de réalisation ;
- la figure 3 illustre une vue en coupe transversale d'un instrument canalaire selon l'invention obtenu par un deuxième procédé de réalisation ; et
- la figure 4 illustre une vue en coupe transversale d'un instrument canalaire selon l'invention obtenu par un troisième procédé de réalisation.

L'instrument canalaire (1) selon l'invention, est un instrument canalaire du type alésoir dentaire, comportant une section de travail (10) comprenant trois cannelures (20, 21, 22) formant trois lèvres de coupe (30, 31, 32). Il est caractérisé en ce que les trois lèvres de coupe (30, 31, 32) sont situées aux sommets d'un triangle isocèle.

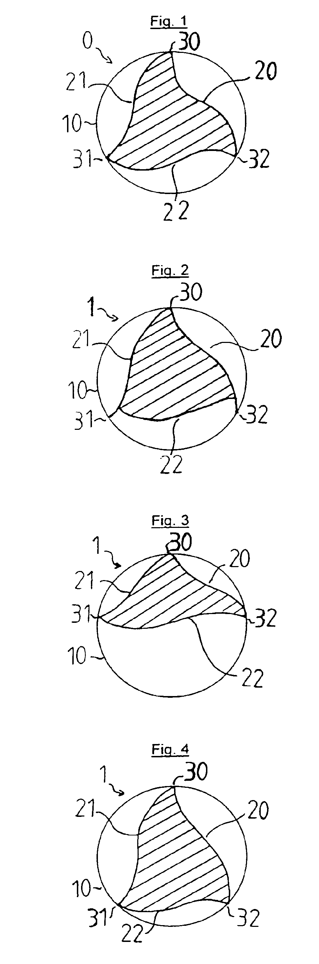

Comme tous les instruments canalaires de ce type, l'instrument selon l'invention possède une section de travail (10), encore appelée « lame » dont la partie active est obtenue par taillage et présente une forme conique également obtenue par taillage. La forme conique est obtenue le plus souvent en éloignant progressivement la meule de taillage de l'axe de l'instrument au fur et à mesure que l'on s'éloigne de la pointe de l'instrument.
Un instrument canalaire (0) de l'art antérieur, obtenu par usinage de trois cannelures (20, 21, 22), identiques, formant trois lèvres de coupe (30, 31, 32) disposées à 120 °, est illustré figure 1.

La présente invention se rapporte également à différents procédés de réalisation de l'instrument canalaire selon l'invention.

Une première possibilité de réalisation de l'instrument (1) selon l'invention consiste à réaliser deux cannelures (20, 21) en opérant deux usinages successifs, identiques, à 120 °, puis à réaliser la troisième cannelure (22) en opérant un troisième usinage à une profondeur plus importante que les deux premiers, comme illustré figure 2.
Il est en outre possible de réaliser la profondeur de la troisième cannelure (22) telle qu'elle soit plus importante que celle des deux premières cannelures (20, 21) à la pointe de la section de travail (10) de l'instrument, puis devienne identique à la profondeur des deux premières cannelures (20, 21).
La profondeur de la troisième cannelure (22) peut devenir identique à celle des deux premières cannelures (20, 21) soit à la fin de la section de travail (10), soit avant la fin de la section de travail (10).

Une deuxième possibilité de réalisation de l'instrument (1) selon l'invention consiste à réaliser deux cannelures (20, 21) en opérant deux usinages successifs, identiques, à un angle supérieur à 120 °, puis à réaliser la troisième cannelure (22) en opérant un troisième usinage en complément des deux premiers, comme illustré figure 3.

Une troisième possibilité de réalisation de l'instrument (1) selon l'invention consiste à réaliser deux cannelures (20, 21) en opérant deux usinages successifs, identiques, à un angle inférieur à 120 °, puis à réaliser la troisième cannelure (22) en opérant un troisième usinage en complément des deux premiers, comme illustré figure 4.

## Revendications

1. Instrument canalaire (1) du type alésoir dentaire, comportant une section de travail (10) comprenant trois cannelures (20, 21. 22) formant trois lèvres de coupe (30, 31, 32), **caractérisé en ce que** les trois lèvres de coupe (30, 31, 32) sont situées aux sommets d'un triangle isocèle et **en ce que** la profondeur de la troisième cannelure (22) est plus importante que celle des deux premières cannelures (20, 21) à la pointe de la section de travail (10) de l'instrument puis devient identique à la profondeur des deux premières cannelures (20, 21) en direction de la fin de section de travail (10).

## Claims

1. A root canal instrument (1) of the dental borer type, comprising a working section (10) including three flutes (20, 21, 22) forming three cutting lips (30, 31, 32), **characterised in that** the three cutting lips (30, 31, 32) are located at the apices of an isosceles triangle and **in that** the depth of the third flute (22) is more important than that of the two first flutes (20,21) at the point of the working section (10) of the instrument then becoming identical to the depth of the two first flutes (20, 21) in the direction of the end of the working section (10).

## Patentansprüche

1. Instrument zur Aufbereitung von Zahnwurzelkanälen mit einem Arbeitsabschnitt (10), der drei rillenartige Vertiefungen (20, 21, 22) aufweist, die drei Schneidlippen (30, 31, 32) bilden, **dadurch gekennzeichnet, dass** die drei Schneidlippen (30, 31, 32) an den Scheiteln eines gleichschenkligen Dreiecks angeordnet sind und dass die Tiefe der dritten rillenartigen Vertiefung (22) im Anfangsbereich des Arbeitsabschnittes (10) ausgeprägter als die der ersten beiden rillenartigen Vertiefungen (20, 21) ist und dann in Richtung des Endes des Arbeitsabschnittes (10) gleich der Tiefe der ersten beiden rillenartigen Vertiefungen (20, 21) wird.
